Europäisches Patentamt

European Patent Office

Office européen des brevets

(19)

(11) Publication number: 0 091 545
A2

# (12) EUROPEAN PATENT APPLICATION

(21) Application number: 83101543.3

(22) Date of filing: 18.02.83

(51) Int. Cl.³: G 01 N 21/21

(30) Priority: 12.04.82 US 367692

(43) Date of publication of application:
19.10.83 Bulletin 83/42

(84) Designated Contracting States:
DE FR GB

(71) Applicant: International Business Machines
Corporation
Old Orchard Road
Armonk, N.Y. 10504(US)

(72) Inventor: Chastang, Jean-Claude Andre
68 Hatfield Road RFD No. 1
Mahopac New York 10541(US)

(72) Inventor: Hildenbrand, Walter William
Birch Hill Acres
Brewster New York 10509(US)

(72) Inventor: Levanoni, Menachem
623 Giordano Drive
Yorktown Heights New York 10598(US)

(74) Representative: Lewis, Alan John
IBM United Kingdom Patent Operations Hursley Park
Winchester, Hants, S021 2JN(GB)

(54) Ellipsometers.

(57) An ellipsometer includes a quarter wavelength plate 16 located between a laser source 14 and an electro-optic polarization modulator 18 driven in time quarature by two 90 degree out-of-phase A C electrical signals at a single frequency. The modulator consists of an array of uniaxial electro-optic crystal plates 18A, B, C, D, E in series and is located between the laser source 14 and the sample 12. The polarization modulator 18 is operative to rotate the planes of polarization of the light transmitted therethrough. A 45° analyzer 20 is located between the sample 12 and the detector 22. A stored program computer 24 is connected to the output of the detector 21 to acquire data at specific times and to analyze the signal.

EP 0 091 545 A2

ELLIPSOMETERS

The invention relates to ellipsometers.

U S Specification No. 3,741,661 (Yamamoto) describes an ellipsometer capable of measuring the two variables of polarization (angle of elleptical orientation and phase difference) of a polarized light beam after modulation of the beam by a specimen orientated at an arbitary angle. Circularly polarized light is incident on the specimen and the modulated light passed successively through a quarter wave ( $\lambda/4$) plate, a half wave ($\lambda/2$) plate, an optical modulator, a Savart plate, and an analyzer before reached a photo detector. The $\lambda/2$ and $\lambda/4$ plates are rotatably mounted and angularly rotated by two separate servo-motors energised from the output of the photo-detector. The optical modulator comprises a $\lambda/2$ plate positioned between two electro-optical crystal plates energized by two $\pi/2$ out-of-phase signals and has the effect of rotating the plane(s) of polarization of light passing therethrough.

In use the specimen is set-up and the ellipsometer operated to mechanically move the rotatable $\lambda/2$ and $\lambda/4$ plates to angular positions in which a predetermined output is detected by the photo-detector. Instruments coupled to the two plates then provide the desired information about elliptical orientation and phase difference. Thereafter the servo-motors are disabled and the Savart plate manually moved to determined the phase difference introduced by the specimen.

A practical use for ellipsometers is in the analysis of the surface of a body or of a thin film thereon. When the analysis is to be made in the course of a manufacturing process, for example during the formation of a thin film layer on a body, the measurements have to be made very rapidly. With the foregoing Yamamoto ellipsometer and other ellipsometers which require mechanical movement of parts, rapid measurement is difficult and inconvenient to achieve. The present invention is concerned with this problem of making rapid analyses of the surfaces of bodies or films.

It is therefore a primary object of this invention to provide an improved ellipsometer.

It is another object of this invention to provide a high speed accurate ellipsometer.

It is yet another object of this invention to provide an ellipsometer without any mechanically moving parts.

It is yet still another object of this invention to provide an ellipsometer having superior reliability to mechanical ellipsometers.

These and other objects are accomplished by an ellipsometer that includes a polarization modulator driven in time quadrature at a single frequency. The modulator which consists of an array of two or more uniaxial electro-optic crystals in series is located between the laser source and the sample. The optic axes of the crystals are parallel to the laser beam propagation direction. A quarter wavelength plate is located between the laser and the polarization modulator. The laser beam passes through the quarter wavelength plate and the polarization modulator and strikes the sample at an angle of incidence of, for example, 70°. A 45° analyzer is located between the sample and the detector and receives the beam reflected by the sample. In a preferred embodiment, a computer is employed to connect the output of the detector to acquire data at specific times and to analyze the signal.

Accordingly the invention provides an ellipsometer for use with a sample, comprising a source of monochromatic light to provide a beam of light directed at the sample, a quarter wave ($\lambda/4$) plate positioned in the beam path between the source and the specimen, and a detector positioned to receive light from the specimen, said ellipsometer being characterised by the combination of an electro-optical polarization modulator positioned in the beam between the quarter wave plate and the sample and a polarization analyser located in the beam between the sample and the detector, said polarization modular being driven by two separate electrical signals having the same frequency but in time quadrature (i.e. 90° out-of-phase) so that the plane of polarization of the light emerging from the modulator is effectively rotated at the frequency of the applies signals.

The invention will now be further described with reference to the accompanying drawing which is a schematic view of a ellipsometer in accordance with the invention.

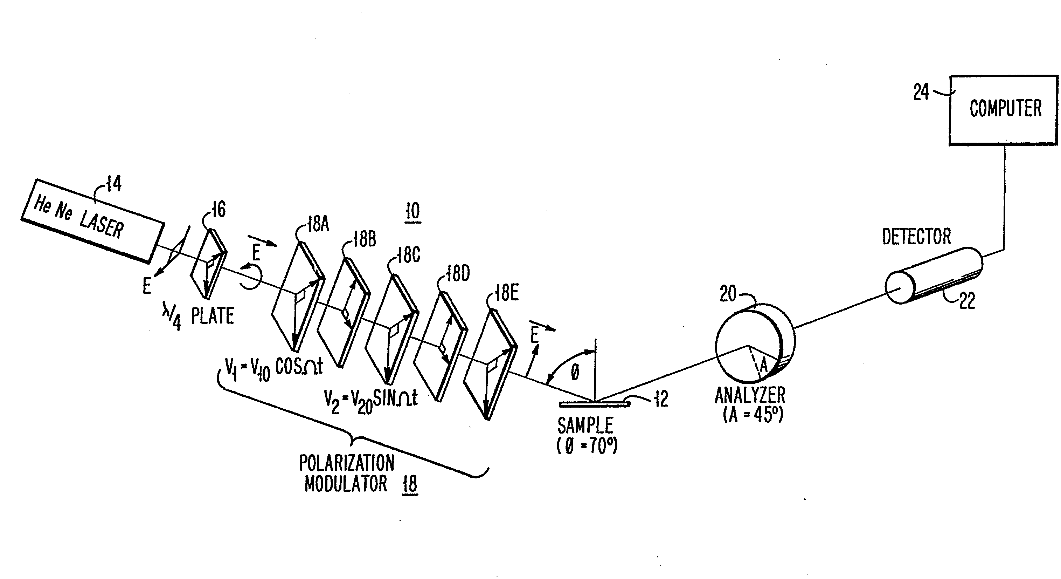

As shown in Figure 1, the ellipsometer 10 for use with a sample 12 includes a laser source 14, for example a helium neon laser, that provides a single plane polarized beam. The beam from the laser source 14 passes through a $\lambda/4$ plate 16 suitably oriented as shown in the drawing, resulting in circular polarization. The beam passes through a polarization modulator 18 driven in time quadrature. Modulator 18 converts the polarization of the beam to a state of effective rotation, the frequency of which is determined by its driving circuit. The modulator 18 consists of two (18A and 18B) or more (18C, 18D and 18E) uniaxial electro-optic crystals in series, with their optic axes parallel to the beam propagation direction. The principal dielectric axes of crystal 18B are aligned at 45° with respect to the dielectric axes of crystal 18A. The driving voltages (applied along the optic axis for the longitudinal electro- optic effect) are 90° out of phase with respect to each other (i.e. in time quadrature). For example, crystal 18A (and 18C and 18E) is driven at $V_1 = V_{10} \cos \Omega t$ while crystal 18 (and 18D) is driven at $V_2 = V_{20} \sin \Omega t$ where $\Omega$ is the driving frequency. The amplitudes $V_{10}$ and $V_{20}$ are such that the maximum resultant electro- optic retardation is $\lambda/4$. This "quarter wave" voltage is equal to one-half the "half wave" voltage, specified by manufacturers of electro-optic modulators. It is given by $V_{\pi/2} =$

$\lambda/4n_0^3 \gamma_{63}$, where $n_0$ is the "ordinary" index of refraction and $\gamma_{63}$ is a component of the electro-optic sensor.

Operation of the modulator proceeds as follows: At $t = 0$ $V_1 = V_{10}$ and $V_2 = 0$ so that crystal 1 acts as a $\lambda/4$ plate and crystal 2 displays no birefringence. Circularly polarized light, incident on a $\lambda/4$ plate, is transformed to plane polarized light. This, then, is the initial polarization (at $t = 0$). At $t = \pi/2\,\Omega$ $V_1 = 0$ and $V_2 = V_{20}$ so that crystal 18A displays no birefringence while crystal 18B acts as a $\lambda/4$ plate. Since crystal 18B has its dielectric axes rotated 45° with respect to crystal 18A, the resultant output is plane polarized at an angle of 45° to the polarization direction at $t = 0$. A 45° rotation of the plane of polarization has taken place. Similarly, at $t = \pi/\Omega$ and $t = 3\pi/2\Omega$, the output is again plane-polarized and the polarization is rotated through 90° and 135° respectively. After a full period of the modulation frequency (i.e. at $t = 2\pi/\Omega$, the plane of polarization will have rotated through 180°, which represents again the initial polarization state. The effective rotation frequency of the polarization is clearly $\Omega/2$ so that its azimuth angle is given by $p = \Omega/2\,t$.

It should be noted that at times other than the sampled ones, the polarization state of the output is not linear, nor does the major axis of the polarization ellipse rotate at a constant frequency. The deviations, however, are small (a few percent in both cases) and do not affect the results at the sampled points. Furthermore, these deviations can be made arbitrarily small if additional crystals 18C, 18D and 18E are used with crystals 18A and 18B. In this case the crystals are connected optically in series and electrically in parallel in an alternating array, so that type 18A crystals occupy odd positions and type 18B crystals occupy even positions in the array. This arrangement has an added advantage of lowering the required drive voltages. Specifically, the required single crystal drive voltage is reduced by a factor equal to the number of crystals (of that type) in the array. Using four crystals (of each type) in an alternating array, operation of up to 100MHz is possible with less than 50 V drive
voltages (laser metrics, model 3032) at the HeNe wavelength.

The polarization modulated beam coming from polarization modulator
18 is then reflected by the sample 12 through a suitably oriented
polarization analyzer 20 to a single photodetector 22. In a preferred
embodiment a computer 24 e.g. a stored program data processing
apparatus is connected to receive the output of the detector 22 to
acquire data at specific times and programmed to analyze the signal.

The ellipsometer shown in the figure incorporates the
polarizer-analyzer (PSA) arrangement. The photodetector signal I is a
function of the polarizer azimuth angle - p (time dependent) and the
analyzer azimuth angle - A(fixed). This function is given by the
equation

$$I(P,A) = K[1-\cos2\psi \ (\cos 2A + \cos 2P) + \cos 2A \cos 2P$$
$$+ \sin2 \ \psi \cos \Delta \sin 2A \sin 2P]$$

where K is a proportionality constant and $\psi$ and $\Delta$ are the usual
ellipsometric angles.

For a fixed analyzer 20, measurement of detected intensity at
three polarizer angles yields three equations in three unknowns K, $\psi$
and $\Delta$. These equations can then be solved for the desired
ellipsometric parameters $\psi$ and $\Delta$. Specifically, the arrangement shown
in Fig. 1, with a fixed analyzer 20, azimuth angle of A = 45, and the
sampled polarizer angles of P = 0°, 45°, 90° and 135°, yields:

$$I_1 = K(1-\cos2\psi)$$

$$I_3 + IH_1 = 2K$$

$$1_2 = K(1+\sin2 \psi \cos\Delta)$$

$$I_2 + I_4 = 2K$$

or equivalently

0091545

$$I_3 = K(1+\cos 2\psi) \qquad\qquad I_3-I_1 = 2K\cos 2\psi$$

$$I_4 = K(1-\sin 2\psi\cos\Delta) \qquad I_2 = 1_4 = 2K\sin 2\psi\cos\Delta$$

Three of these equations can be solved for $\psi$ and $\Delta$, while the fourth can be used as a test of internal consistency or for increased accuracy. For example,

$$\cos 2\psi = \frac{I_3-I_1}{I_3+I_1} \;;\; \sin 2\psi\cos\Delta = \frac{I_2-I_4}{I_2+I_4} \text{ and } I_3+I_1 = I_2+1_4.$$

The first equation yields $\psi$, which when substituted into the second equation, yields $\Delta$. The intensity sums in the third equation are a good check of proper operation of the instrument.

Although a preferred embodiment of this invention has been described, it is understood that numerous variations may be made in accordance with the principles of this invention.

CLAIMS

1.    An ellipsometer for use with a sample, comprising a source (14) of monochromatic light to provide a beam of light directed at the sample (12), a quarter wave ($\lambda$/4) plate (16) positioned in the beam path between the source (14) and the specimen (12), and a detector (22) positioned to receive light from the specimen, said ellipsometer being characterised by the combination of an electro-optial polarization modulator (18) positioned in the beam between the quarter wave plate (16) and the sample (12) and a polarization analyser located in the beam between the sample and the detector (22), said polarization modular (18) being driven by two separate electrical signals having the same frequency but in time quadrature so that the plane of polarization of the light emerging from the modulator (18) is effectively rotated at the frequency of the applies signals.

2.    An ellipsometer as claimed in claim 1, further characterised in that the polarization modulator (18) comprises at least one pair of uni-axial electro-optic crystal plates (18A, 18B) in series to which the electric signals are applied parallel to the optic axis.

3.    An ellipsometer as claimed in claim 2, further characterised in that the or each pair of plates have their dielectric axes inclined at 45 degrees.

4.    An ellipsometer as claimed in claim 1, 2 or 3, further characterised in that the optical path of the beam is arranged so that the light is incident on the surface of the sample at an angle of about 70 degrees to the normal.

5.    An ellipsometer as claimed in claim 1, 2, 3 or 4, further characterised in that the analyzer has a fixed azimuth angle (A) of 45 degrees.

6.   An ellipsometer as claimed in any one of claims 1 to 5 in combination with a stored program data processing apparatus programmed to analyse the signals received from the detector.

He Ne LASER — 14

16 — $\lambda/4$ PLATE

E

E

10

18A 18B 18C 18D 18E

$V_1 = V_{10} \cos\Omega t$

$V_2 = V_{20} \sin\Omega t$

E

POLARIZATION MODULATOR 18

SAMPLE ($\phi = 70°$)

$\phi$

12

20 — ANALYZER (A = 45°)

A

DETECTOR

22

24 — COMPUTER

1/1